Europäisches Patentamt

European Patent Office

Office européen des brevets

(19)

(11) Numéro de publication : **0 104 987**
**B1**

(12) **FASCICULE DE BREVET EUROPÉEN**

(45) Date de publication du fascicule du brevet :
17.08.88

(51) Int. Cl.⁴ : **G 02 B 27/00, F 41 G 3/22**

(21) Numéro de dépôt : **83401790.7**

(22) Date de dépôt : **13.09.83**

(54) **Viseur de pointage tête haute utilisable comme viseur de tir.**

(30) Priorité : **24.09.82 FR 8216160**

(43) Date de publication de la demande :
**04.04.84 Bulletin 84/14**

(45) Mention de la délivrance du brevet :
**17.08.88 Bulletin 88/33**

(84) Etats contractants désignés :
**DE GB**

(56) Documents cités :
**EP-A- 0 007 039**
**FR-A- 2 075 391**
**GB-A- 1 193 791**
**US-A- 3 940 204**
**US-A- 4 082 432**
**APPLIED OPTICS and OPTICAL ENGINEERING edité par R. KINGSLAKE - Volume V Optical Instruments - Partie II 1969 - p. 198**

(73) Titulaire : **THOMSON-CSF**
**173, Boulevard Haussmann**
**F-75379 Paris Cédex 08 (FR)**

(72) Inventeur : **Gauthier, François-Hugues**
**THOMSON-CSF SCPI 173, bld Haussmann**
**F-75379 Paris Cedex 08 (FR)**
Inventeur : **Girault, Hervé**
**THOMSON-CSF SCPI 173, bld Haussmann**
**F-75379 Paris Cedex 08 (FR)**
Inventeur : **Thomasson, Daniel**
**THOMSON-CSF SCPI 173, bld Haussmann**
**F-75379 Paris Cedex 08 (FR)**

(74) Mandataire : **Trocellier, Roger et al**
**THOMSON-CSF SCPI 19, avenue de Messine**
**F-75008 Paris (FR)**

EP 0 104 987 B1

## Description

L'invention concerne un viseur de pointage tête haute, utilisable comme viseur de tir, de conception simple, le viseur étant monté à bord d'un véhicule, tel que notamment un hélicoptère, pour diriger un dispositif d'exploitation annexe (canon, tube lance missile, caméra de prise de vue, etc...) également monté sur le véhicule.

De tels viseurs de pointage comportent un générateur de réticule, comprenant par exemple un tube cathodique, un dispositif optique de collimation comprenant une ou plusieurs lentilles et une lame partiellement réfléchissante à faces parallèles. Celle-ci assure la réflexion en direction de l'œil de l'image collimatée du réticule et permet en même temps l'observation d'un paysage extérieur. Dans ces matériels, le générateur de réticule et l'optique de collimation sont maintenus dans un boîtier. Ce boîtier peut présenter, par son encombrement, un masque important s'il est situé dans le champ de vision de l'observateur utilisant le viseur de pointage. En effet, dans ce cas l'œil de l'observateur perçoit clairement les images transmises à travers la lame partiellement réfléchissante mais ne voit pas les autres parties du paysage cachées par l'obstacle présenté par le boîtier du dispositif optique de collimation.

Par ailleurs, de manière à faire varier la direction de pointage de ces viseurs on a recours à la mobilité du réticule sur l'écran du tube cathodique. Les limites de déplacement de ce réticule déterminent un champ, important par rapport à la dimension de ce réticule, pour l'optique de collimation. L'optique de collimation capable de ces performances n'est pas un dispositif simple.

Il est connu par le document APPLIED OPTICS and OPTICAL ENGINEERING édité par R. KINGSLAKE — Volume V. Optical Instruments — Partie II — (1969) — page 198, un viseur du type reflex qui se compose, comme il est indiqué précédemment, de l'ensemble des éléments composé d'un générateur de réticule lumineux, d'une optique collimatrice pour produire une image collimatée du réticule, d'une optique mélangeuse pour assurer la vision simultanée de l'image collimatée du réticule et du paysage extérieur, de moyens de maintien mécanique pour supporter l'ensemble, ces moyens étant formés par un boîtier ou analogue, et des moyens de déplacement pour assurer la rotation de la ligne de visée du viseur de manière à amener l'image collimatée du réticule dans la direction de pointage désirée. Le déplacement est généralement assuré par rotation de l'ensemble du viseur.

L'optique collimatrice et l'optique mélangeuse peuvent être réalisées sous forme d'un élément optique unique au lieu d'être constituées par deux éléments distincts. Ceci est connu dans le domaine des collimateurs tête haute mais non des viseurs de casque à titre d'exemple par la publication brevet EP-A-07039. On utilise dans cette réalisation une optique mélangeuse-collimatrice formée par un élément holographique mais qui, pour une telle réalisation de champ bien plus élevé que dans le cas d'un viseur de pointage, nécessite l'adjonction d'une optique relais complexe et coûteuse pour corriger des aberrations holographiques.

On connaît, en outre, par la publication brevet FR-A-2 095 391 un appareil de visée utilisé sur un canon et non aéroporté et qui comporte une optique mélangeuse solidaire des mouvements d'un gyroscope pour déplacer la ligne de visée par rotation du viseur, de façon à amener l'image collimatée du réticule en direction de la cible.

Le but de l'invention est de réaliser un viseur de pointage ou de tir qui permet de remédier aux inconvénients des systèmes connus précités en utilisant un élément optique mélangeur-collimateur unique asservi à la position du dispositif d'exploitation annexe prévu et installé à bord du véhicule. En outre, le montage à bord est prévu pour que le viseur ne présente pratiquement pas de masque limitant le champ d'observation et en ayant recours à des éléments optiques aisément réalisables et qui peuvent présenter un large champ d'observation.

L'invention consiste en un viseur de pointage ou de tir monté à bord d'un véhicule, tel que notamment hélicoptère, pour diriger un dispositif d'exploitation annexe également monté à bord dudit véhicule, ledit viseur étant du type comprenant un générateur de réticule lumineux, un dispositif optique collimateur pour produire une image collimatée du réticule, un dispositif optique mélangeur pour assurer la vision simultanée de l'image collimatée du réticule et du paysage extérieur, des moyens de maintien mécanique pour solidariser le dispositif optique collimateur et le dispositif optique mélangeur avec le générateur de réticule, et des moyens de déplacement pour assurer la rotation de l'ensemble dispositif collimateur-dispositif mélangeur-générateur de réticule, de façon à permettre l'amenée de l'image collimatée du réticule dans toute direction de visée désirée, le viseur étant caractérisé en ce que le dispositif optique collimateur et le dispositif optique mélangeur constitutif du viseur sont constitués par un élément optique unique partiellement réfléchissant, stigmatique pour son foyer et l'infini, de type holographique avec un hologramme ayant la propriété de conjuger son point focal et l'infini, le réticule lumineux étant un objet lumineux petit champ situé au point focal de l'hologramme, en ce que l'orientation de l'ensemble élément optique-générateur de réticule est asservie à l'orientation du dispositif d'exploitation annexe par un circuit d'asservissement qui commande les moyens de déplacement du viseur en fonction de l'écart d'orientation entre le viseur et le dispositif d'exploitation, et en ce que le véhicule comporte une verrière et un arceau sur lequel les moyens de déplacement du viseur sont fixés de manière à être sensiblement confondus avec le masque présenté par l'arceau dans le champ de vision de l'observateur du viseur.

L'invention sera mieux comprise par la description suivante donnée à titre d'exemple non limitatif et illustrée par les figures qui l'accompagnent. Sur ces différentes figures les mêmes repères désignent les mêmes éléments. Pour des raisons de clarté les cotes et proportions des divers éléments ne sont pas respectées. Ces figures représentent :

— figure 1a et 1b, deux exemples de réalisation d'un viseur de pointage destiné à être installé à bord d'un véhicule, conformément à l'invention ;

— figure 2, un diagramme optique représentant les différentes orientations des rayonnements lumineux d'observation de l'image du réticule pour différentes positions du viseur de pointage ;

— figure 3, un schéma partiel d'un exemple de réalisation d'un générateur de réticule ;

— figure 4, un exemple de réalisation de l'optique collimatrice et mélangeuse sous forme d'un miroir holographique ;

— figure 5, le schéma de principe d'un circuit d'asservissement de la direction de pointage à celle donnée par un dispositif d'exploitation annexe ;

— figure 6, une forme d'utilisation du viseur de pointage comme viseur de tir dans un véhicule, conformément à l'invention.

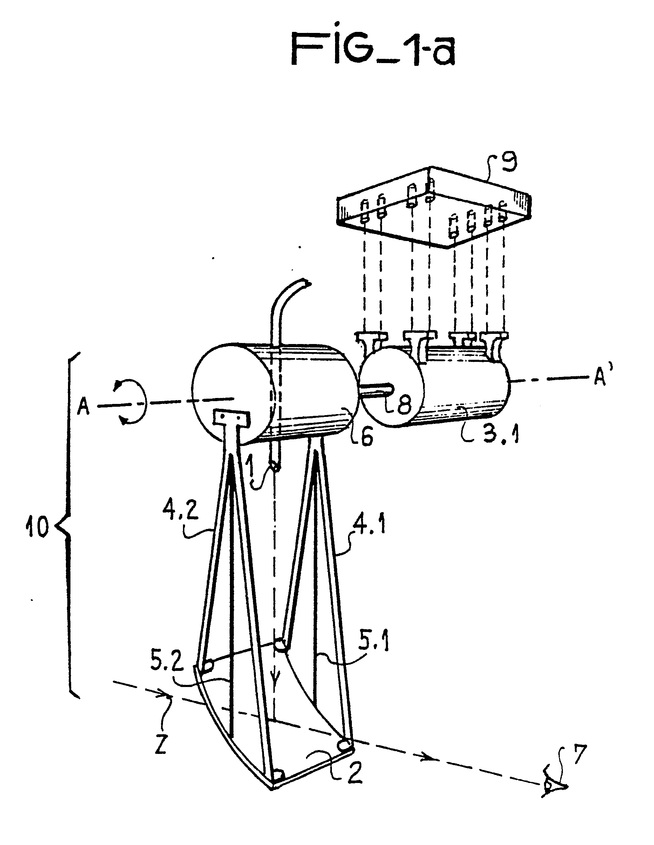

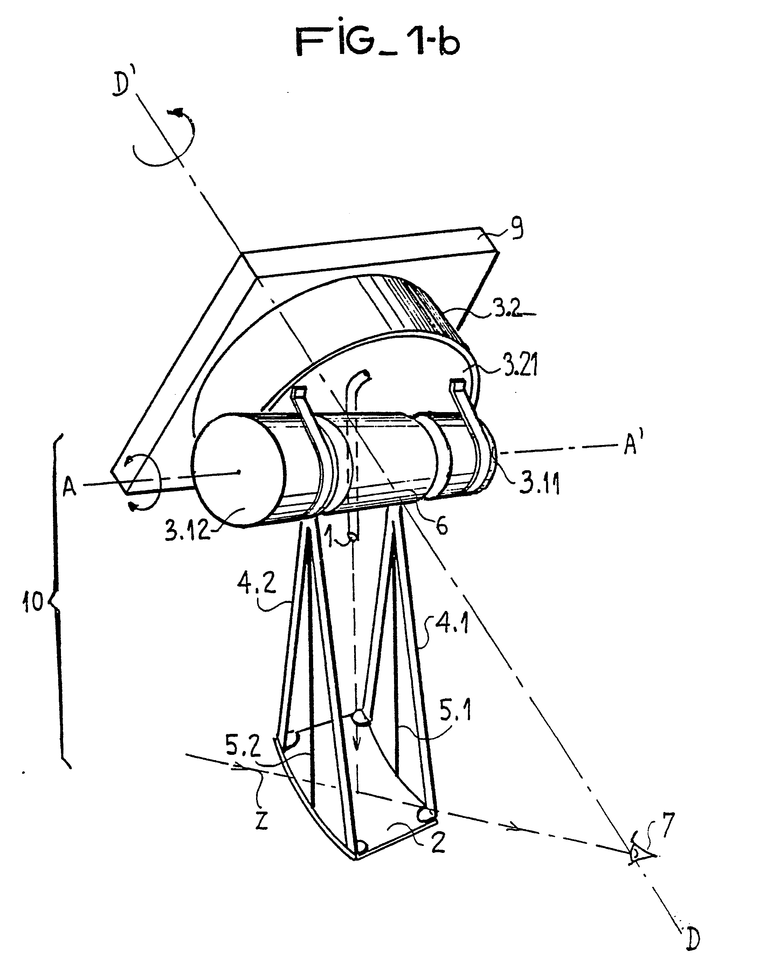

Sur la figure 1a on distingue un exemple de réalisation d'un viseur de pointage 10, destiné à être installé à bord d'un véhicule, conformément à l'invention. Un générateur de réticule 1 produit un rayonnement lumineux en direction d'un dispositif optique 2. Ce dispositif optique 2 réfléchit en direction de l'œil 7 d'un observateur les rayons lumineux en provenance du générateur de réticule 1. Par ailleurs, ce dispositif d'optique 2 laisse passer le rayonnement lumineux, en provenance du paysage observé. Le dispositif optique 2 est partiellement réfléchissant, et assure également la collimation du réticule lumineux dans la direction de l'axe normal de visée Z du viseur.

La fonction de collimation du dispositif partiellement réfléchissant 2 peut être obtenue par la forme de ce dispositif 2. Dans un premier temps on considère que cette forme consiste en une portion hors d'axe d'un paraboloïde dont le foyer se trouve à l'emplacement du réticule. On rappelle ici que la propriété d'un miroir paraboloïdal est de renvoyer dans une direction, parallèle à son axe de révolution, le rayonnement lumineux émis par une source lumineuse ponctuelle située à son foyer. L'axe de révolution de la portion de paraboloïde est donc parallèle à l'axe Z. La portion de paraboloïde envisagée ici est dite hors d'axe parce que l'axe du paraboloïde, dont elle fait partie, ne la traverse pas. Le rayonnement lumineux en provenance du générateur du réticule, réfléchi par le dispositif 2, comporte donc des rayons parallèles et en conséquence le dispositif 2 assure la collimation du réticule.

Sur la figure 1a on distingue également un moyen de déplacement 3.1 assurant le déplacement en rotation autour d'un axe AA' de l'ensemble constitué par le générateur de réticule 1 et le dispositif 2, reliés fixement à une pièce de liaison 6. Un jeu de tiges 4.1-4.2 fines et éventuellement un jeu de haubans 5.1-5.2 maintiennent le dispositif 2 à la pièce 6. Ces moyens de maintien sont donc prévus pour présenter un faible masque dans le champ de vision de l'observateur. L'axe AA' est orthogonal à l'axe Z. L'arbre de rotation 8 du moyen de déplacement 3.1, colinéaire à l'axe AA', est également fixé sur la pièce de liaison 6. Ce moyen de déplacement 3.1 consiste en un moteur dans un exemple. Le moteur 3.1 est fixé sur un support 9.

Dans un autre exemple de réalisation, représenté sur la figure 1b, les moyens de déplacement comportent deux jeux de moteurs. Un premier jeu, 3.11 et 3.12, entraîne en rotation la pièce de liaison 6 autour de l'axe AA' et est fixé au rotor 3.21 du moteur 3.2 du deuxième jeu. Ce moteur 3.2 est fixé au support 9. Sa rotation s'effectue selon un axe DD'. D'une manière préférée dans l'invention cet axe DD' est perpendiculaire à l'axe AA' et passe au voisinage de la position de l'œil 7 observant à travers le viseur. Ces moyens de déplacement permettent à l'ensemble comportant la pièce de liaison 6, le générateur de réticule et le dispositif 2 de se mouvoir avec deux degrés de liberté en rotation par rapport au support 9.

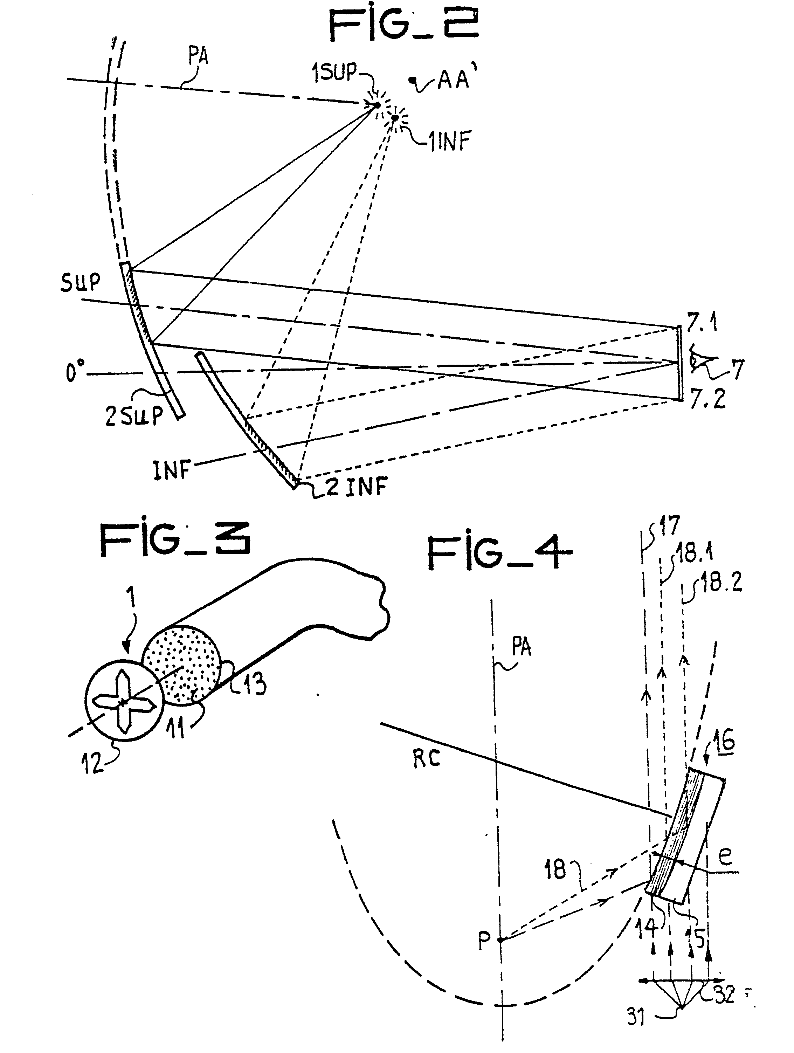

Le fonctionnement du viseur de pointage 10 tel que décrit en référence à la figure 1a, est mis en évidence avec le diagramme optique apparaissant sur la figure 2. Sur cette figure on distingue l'œil 7 d'un observateur observant le paysage autour d'une direction moyenne d'observation notée 0°. En particulier l'œil 7 peut percevoir l'image du réticule dans la direction SUP lorsque les positions respectives du générateur de réticule 1 et du dispositif 2 se trouvent dans les positions 1SUP et 2SUP par rapport à l'axe AA'. La figure 2 étant présentée en coupe l'axe AA' est réduit à un point. Selon les dispositions décrites précédemment, le rayonnement lumineux émanant du générateur de réticule 1 dans la position 1SUP se réfléchit sur le dispositif 2, dans la position 2SUP, et le rayonnement réfléchi présente une direction SUP parallèle de l'axe de révolution PA du paraboloïde. Un raisonnement similaire prévaut pour la direction inférieure notée INF.

D'une position à l'autre du générateur de réticule 1 et donc d'une position à l'autre du dispositif 2 on remarque que le rayonnement utile, aboutissant dans une zone 7.1-7.2 où se trouve normalement l'œil de l'observateur, sera réfléchi par des portions de surfaces différentes du dispositif partiellement réfléchissant et de collimation 2. Ceci n'a pas de conséquence puisque le dispositif 2 est stigmatique pour son foyer et l'infini. En effet, l'image conjuguée du réticule 1, placé au foyer du dispositif 2, est transportée par un rayonnement parallèle issu de ce dispositif 2. Cette remarque enseigne cependant que la zone 7.1-7.2, limite de déplacement de l'œil 7 de l'observateur, est déterminée par les limites du chevauchement des faisceaux lumineux issus du dispositif 2 quand celui-ci passe d'une position extrême à l'autre dans la plage de champ de pointage prévue. En résumé, lorsque le générateur de réticule 1 et le dispositif 2 passent de la position INF à la position SUP l'œil 7 de l'observateur voit l'image du réticule du viseur de pointage passer de la direction INF à la direction SUP ; l'œil 7 de l'observateur voit l'image du générateur de réticule sous réserve que sa position d'observation se situe dans la zone géométrique où les divers rayonnements réfléchis se chevauchent.

La figure 2 montre en conséquence quelle doit être la hauteur, mesurée orthogonalement à l'axe AA', du dispositif 2, elle permet d'apprécier en effet cette grandeur à partir des limites supérieures (SUP) et inférieures (INF) des directions de visée désirées pour le champ de pointage. Pour ne pas être amené à réaliser un dispositif 2 trop large, la largeur étant mesurée perpendiculairement à la hauteur, on choisit, comme cela est indiqué plus haut, un deuxième axe de rotation DD' (figure 1b) passant par, ou au voisinage de, la position moyenne de l'œil 7 de l'observateur. Il s'ensuit que relativement à cette dernière rotation c'est toujours une même portion de la lame 2 qui est sollicitée et donc la lame 2 peut être fine (c'est-à-dire peu large).

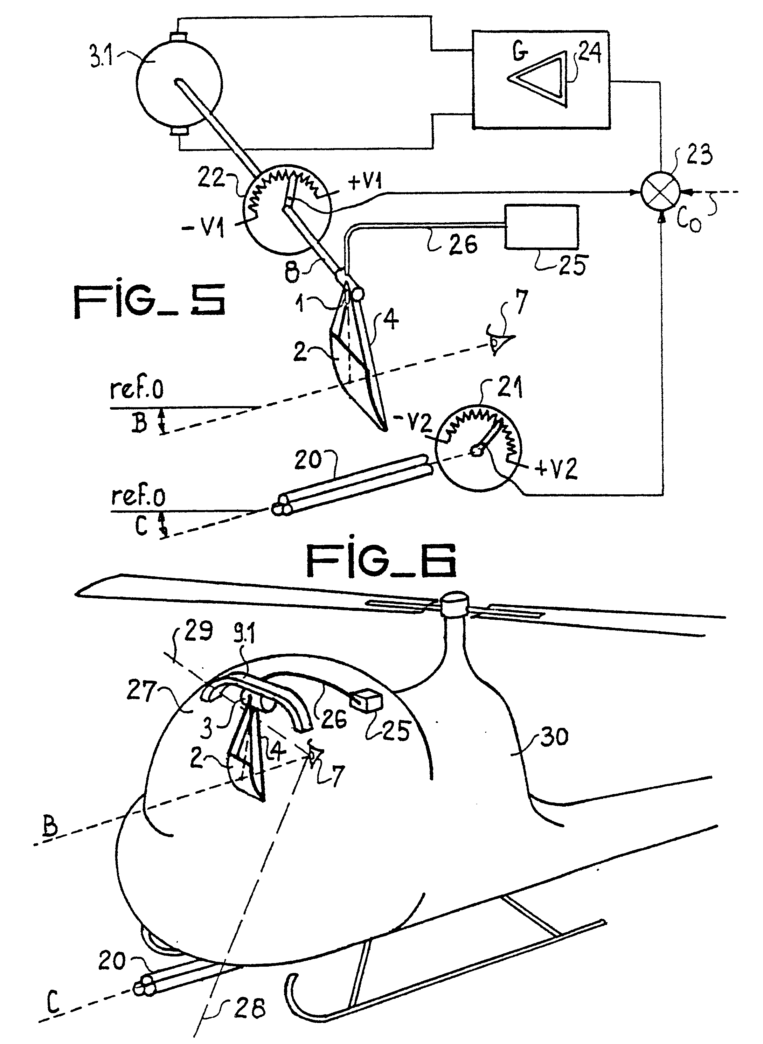

Sur la figure 3 on a montré une vue éclatée d'un exemple d'une partie d'un générateur de réticule 1 utilisé dans l'invention. Ce générateur de réticule 1 comprend une source lumineuse non représentée, disposée en regard d'une extrémité d'un faisceau de fibres optiques 11 qui aboutit à une autre extrémité 13, sur un masque 12. Ce masque 12 a la forme d'un disque dont la partie centrale a été évidée, par exemple, en forme de croix. Le fonctionnement du générateur de réticule est le suivant : la source lumineuse éclaire une extrémité du faisceau de fibres optiques, le faisceau de fibres optiques transmet la lumière en direction de son extrémité 13. A cette extrémité 13 la lumière diffuse, hors de chacune de ces fibres optiques, au travers du masque 12 et produit ainsi un réticule lumineux de la forme de la partie évidée du masque 12. Cette réalisation permet d'avoir un réticule lumineux d'étendue limitée, et donc petit champ. Ceci a pour effet que la fonction de collimation du dispositif 2 sera aisément réalisable puisque son champ objet est petit. Cet exemple de réalisation d'un générateur de réticule est une forme préférée de réalisation du générateur de réticule selon l'invention. Dans ce cas, les moyens de fixation de ce générateur de réticule sur la pièce de liaison 6 consiste en un percement, exécuté sur cette pièce et permettant le libre passage du faisceau de fibres avant son scellement sur celle-ci. Cette forme de réalisation n'est cependant pas la seule, d'autres dispositions peuvent être envisagées par exemple un ensemble, ordonné géométriquement, de diodes électroluminescentes fixé à la pièce 6.

Sur la figure 4 on a représenté un exemple de réalisation d'un dispositif 2 utilisé dans l'invention. On a dit plus haut que le dispositif 2 pouvait être une lame partiellement réfléchissante dont la forme correspond à la portion d'un paraboloïde. La réalisation d'une telle forme paraboloïdale pouvant être délicate, on a recours à un hologramme 16 pour réaliser la fonction partiellement réfléchissante et la fonction de collimation du dispositif 2. L'hologramme 16 comporte une couche en un matériau photosensible 14 déposée sur une couche support 15 en un matériau transparent. L'épaisseur e de cette couche 14 de matériau photosensible est préférentiellement grande par rapport à la longeur d'onde de l'onde lumineuse servant à produire le réticule lumineux. On sait qu'un tel hologramme peut avoir des propriétés en transmission en même temps que des propriétés en réflexion.

En particulier, il peut permettre la réflexion d'un rayonnement lumineux émis sous une longueur d'onde donnée, et la transmission d'un rayonnement lumineux émis avec une largeur spectrale diminuée de la bande passante lumineuse autorisée en réflexion. Par ailleurs, on sait que pour un tel hologramme la fonction optique de collimation est indépendante de la forme du support ayant permis sa réalisation. En particulier, la couche de matériau transparent 15 et la couche de matériau photosensible 14 peuvent être planes.

La fonction de collimation enregistrée dans cet hologramme est, comme cela est connu dans la théorie, uniquement liée à la manière dont il a été enregistré. Dans le cas de l'invention, l'hologramme 16 a la propriété de distribuer en un rayonnement, constitué de rayons parallèles 17, le rayonnement qu'il a réfléchi et provenant d'un point particulier P que l'on appelle point focal par extension. Cet hologramme 16 est enregistré selon une technique connue par deux sources lumineuses monochromatiques cohérentes entre elles et placées dans des positions telles que l'hologramme ainsi enregistré ait les propriétés requises. En particulier l'hologramme 16 est enregistré par une première source ponctuelle placée à son point focal P, et par une deuxième source ponctuelle 31 collimatée par un objectif 32, située du côté de l'autre face de l'hologramme 16 dans la direction inverse de celle des rayons réfléchis 17. Un raisonnement de la théorie des hologrammes montre que les surfaces équiphases enregistrées dans la couche de matériau photosensible de cet hologramme ont une forme paraboloïdale, de même allure que celle évoquée pour le dispositif 2 décrit précédemment.

Si l'hologramme ayant les propriétés du dispositif 2 de l'invention est un hologramme plan, ses surfaces équiphases révélatrices de l'effet holographique, coupent sa surface. Un tel hologramme enregistré dans ces conditions présente donc un certain chromatisme. Pour éviter ou limiter ce chromatisme on peut réaliser l'enregistrement d'un hologramme disposé sur une surface sphérique dont le rayon de courbure RC, visible sur la figure 4, est tel que la focale de l'hologramme réalisé soit voisine de la focale du miroir sphérique support utilisé dans les mêmes conditions.

Sur la figure 4 on distingue un rayon lumineux particulier 18 se réfléchissant sur la face avant de l'hologramme en rayon lumineux 18.1 et se réfléchissant sur la face arrière de l'hologramme en rayon lumineux 18.2. Cette représentation schématique a pour objet de mettre en évidence l'intérêt d'utiliser un hologramme pour réaliser le dispositif partiellement réfléchissant et de collimation utilisé dans l'invention par opposition à l'utilisation d'une lame partiellement réfléchissante classique. On sait que l'intensité du rayon lumineux 18.2 réfléchi par le miroir holographique est de l'ordre de 90 % de l'intensité du rayon lumineux incident 18. Par contre le rayon lumineux 18.1 a une intensité de l'ordre de 0,05 % de l'intensité du rayon incident 18. Il s'agit de la réflexion dite « vitreuse ». Le reste du rayonnement est transmis par l'hologramme. Le rapport des intensités des rayons lumineux 18.1 et 18.2 est dans ce cas tel que l'œil de l'observateur ne discerne pas la présence du rayonnement parasite 18.1. Par contre dans l'art antérieur, comportant des dispositifs partiellement réfléchissants en des matériaux transparents, le rapport de luminosité des rayons parasites aux rayons utiles est de l'ordre de 5 % de nature à provoquer des troubles de perception.

Sur la figure 5 on a représenté un circuit d'asservissement permettant au viseur de pointage 10 pour véhicule selon l'invention d'être orienté dans la même direction que celle présentée par un dispositif d'exploitation 20 annexe utilisant le viseur de pointage. On distingue sur cette figure le viseur de pointage comprenant, son générateur de réticule 1, le dispositif 2, le moyen de déplacement 3.1 et des moyens de maintien 4, permettant à l'œil 7 d'un observateur de saisir l'image collimatée du réticule dans une direction faisant un angle B par rapport à une direction de référence notée réf O sur la figure. Le dispositif d'exploitation 20 est orienté dans une direction faisant un angle C par rapport à cette direction de référence O. Pour simplifier l'explication on considère que les différentes directions sont toutes dans un même plan. En particulier, ce sont des directions en site. Il est cependant tout à fait possible de faire varier les différentes directions en azimut ou même en une combinaison site/azimut, notamment au moyen des moteurs 3.11, 3.12 et 3.2 décrits précédemment. Dans ce cas les circuits d'asservissement sont doublés, chacun correspondant à une orientation différente en site ou en azimut. Le dispositif d'exploitation 20 peut consister par exemple, en un canon, en un tube lance missiles ou en un dispositif de prise de vues.

Dans l'exemple représenté, le moyen de déplacement comporte un moteur électrique 3.1 alimenté électriquement par un amplificateur 24. Selon le signal délivré par cet amplificateur, le moteur 3.1 sera entraîné dans un sens ou dans l'autre ou même sera arrêté. Un potentiomètre 21 est alimenté entre des tensions continues — V2 et + V2, son curseur est solidaire du moyen d'orientation du dispositif d'exploitation 20. Ce curseur délivre une tension électrique révélatrice de l'orientation du dispositif d'exploitation 20. Un potentiomètre 22 est alimenté entre des tensions

— V1 et + V1 et son curseur est solidaire de l'axe de rotation 8 du viseur de pointage. Ce curseur délivre une tension révélatrice de l'orientation du viseur de pointage. Les tensions — V1/+ V1 peuvent être prises respectivement identiques aux tensions — V2/+ V2. Les tensions délivrées par ces curseurs sont introduites aux entrées d'un comparateur 23 délivrant un signal électrique égal à la différence de ces deux tensions. Ce signal électrique est introduit à l'entrée de l'amplificateur 24. Selon cette disposition on constate que tout changement d'orientation en site du dispositif d'exploitation 20 entraîne immédiatement la modification correspondante de l'orientation de pointage en site du viseur de pointage. La source lumineuse 25 éclaire l'extrémité d'un faisceau de fibres optiques 26 dont l'autre extrémité produit le réticule lumineux. L'œil 7 de l'observateur distingue donc dans la direction B, asservie à la direction C, l'image collimatée du réticule.

Les directions B et C sont les mêmes lorsque le dispositif d'exploitation 20 du viseur de pointage comprend un dispositif de prise de vues ; elles sont légèrement différentes l'une de l'autre, tenant compte de la correction de hausse qu'il est nécessaire d'envisager, lorsque le dispositif d'exploitation 20 comprend des armes balistiques. Dans ce dernier cas, en outre, la correction de hausse tiendra compte de la position par rapport à l'horizontale de ce dispositif d'exploitation 20 pour apporter des corrections différentes en fonction de cette position. Dans la présente invention où l'ensemble viseur de pointage et dispositif d'exploitation sont installés sur un véhicule, l'asservissement peut compter, en outre, des moyens pour tenir compte de la vitesse du véhicule. Ces diverses corrections sont apportées sur une entrée supplémentaire Co du comparateur 23.

Sur la figure 6 on a représenté un exemple particulier de véhicule selon l'invention où peut être installé un viseur de pointage utilisé comme viseur de tir selon l'invention. Dans cette représentation le véhicule est un hélicoptère 30. La direction de pointage B indiquée en pointillés est orientée dans une direction correspondant à la direction de pointage C du dispositif d'exploitation 20 dessiné également en pointillés. Par ailleurs on a dessiné sur cette figure des directions d'observation 28 et 29 débordant largement du champ de pointage désiré pour le viseur telles qu'elles apparaissent au pilote de cet hélicoptère. Le viseur de pointage ne présente pas de masque gênant cette observation. A cet effet on remarque une particularité de l'invention, consistant à adapter les moyens de déplacement 3 du viseur de pointage selon un ou deux degrés de liberté, sur un masque naturel de la verrière 27 de cet hélicoptère constitué par un arceau support 9.1 de cette verrière. En conséquence l'obstacle visuel rapporté au champ de vision par les moyens de déplacement 3 ainsi que d'ailleurs par les divers moyens de fixation 6 et le potentiomètre de recopie 22 sont confondus avec le masque naturel imposé par l'arceau 9.1.

**Revendications**

1. Viseur de pointage ou de tir monté à bord d'un véhicule, tel que notamment hélicoptère (30), pour diriger un dispositif d'exploitation annexe (20) également monté à bord dudit véhicule, ledit viseur (10) étant du type comprenant un générateur de réticule lumineux (1), un dispositif optique collimateur (2) pour produire une image collimatée du réticule, un dispositif optique mélangeur (2) pour assurer la vision simultanée de l'image collimatée du réticule et du paysage extérieur, des moyens de maintien mécanique (4, 5, 6) pour solidariser le dispositif optique collimateur et le dispositif optique mélangeur avec le générateur de réticule, et des moyens de déplacement (3, 3.1, 3.2) pour assurer la rotation de l'ensemble dispositif collimateur-dispositif mélangeur-générateur de réticule, de façon à permettre l'amenée de l'image collimatée du réticule dans toute direction de visée (B) désirée, le viseur étant caractérisé en ce que le dispositif optique collimateur et le dispositif optique mélangeur constitutif du viseur (10) sont constitués par un élément optique unique (2) partiellement réfléchissant, stigmatique pour son foyer et l'infini, de type holographique avec un hologramme (16) ayant la propriété de conjuguer son point focal et l'infini, le réticule lumineux étant un objet lumineux petit champ situé au point focal de l'hologramme, en ce que l'orientation (B) de l'ensemble élément optique (2)-générateur de réticule (1) est asservie à l'orientation (C) du dispositif d'exploitation annexe (20) par un circuit d'asservissement (21 à 24) qui commande les moyens de déplacement (3, 3.1, 3.2) du viseur en fonction de l'écart d'orientation (B, C) entre le viseur et le dispositif d'exploitation, et en ce que le véhicule comporte une verrière (27) et un arceau (9.1) sur lequel les moyens de déplacement (3) du viseur (10) sont fixés de manière à être sensiblement confondus avec le masque présenté par l'arceau dans le champ de vision de l'observateur du viseur.

2. Viseur selon la revendication 1, caractérisé en ce que les moyens de maintien mécanique (4, 5) du viseur (10) présentent un faible masque dans le champ de vision de l'observateur du viseur et en ce que les moyens de déplacement (3) du viseur comportent un moteur électrique (3.1) pour conférer au viseur un degré de liberté en orientation.

3. Viseur selon la revendication 2, caractérisé en ce que les moyens de déplacement (3) du viseur comportent un deuxième moteur électrique (3.2) pour conférer au viseur un deuxième degré de liberté en orientation.

4. Viseur selon la revendication 1, caractérisé en ce que le circuit d'asservissement (21 à 24) comporte en outre des moyens (23, Co) pour effectuer une correction de hausse en fonction de données tactiques.

**Claims**

1. A sighting device or gun-sight mounted on board of a vehicle, in particular a helicopter (30), for directing an attached exploitation device (20) also mounted on board of the vehicle, the sighting device (10) being of the type comprising a light reticle generator (1), an optical collimator device (2) for generating a collimated image of the reticle, an optical mixer device (2) for ensuring the simultaneous view on the collimated image of the reticle and on the outer landscape, mechanical holging means (4, 5, 6) adapted to tie together the optical collimator device and the optical mixer device with the reticle generator, and displacement means (3, 3.1, 3.2) for ensuring the rotation of the assembly constituted of the collimator device, the mixer device and the reticle generator, so as to allow for moving the collimated image of the reticle in any desired sighting direction (B), characterized in that the optical collimator device and the optical mixer device forming a constituant part of the sighting device (10) are constituted of a unique optical element (2) which is partially reflecting, stigmatic at its focus and at infinity, belongs to the holographic type including a hologram (16) having the capacity of conjugating its focus and infinity, the light reticle being a small area light object located in the focal point of the hologram, that the orientation (B) of the assembly constituted by the optical element (2) and the reticle generator (1) is controlled in accordance with the orientation (C) of the attached exploitation device (20) by means of a control circuit (21 to 24), which controls the displacement means (3, 3.1, 3.2) of the sighting device in dependence of the orientation difference (B, C) between the sighting device and the exploitation device, and that the vehicle comprises a canopy (27) and an arch (9.1) upon which the displacement means (3) of the sighting device (10) are fixed in such way as to be substantially integral with the mask constituted by the arch in the field of vision of the sighting device user.

2. A sighting device according to claim 1, characterized in that the mechanical holding means (4, 5) for holding the sighting device (10) represent a small mask in the sighting device user's field of vision, and that the displacement means (3) of the sighting device comprise an electric motor (3.1) for conferring to the device a degree of freedom in orientation.

3. A sighting device according to claim 2, characterized in that the sighting device displacement means (3) comprise a second electric motor (3.2) for conferring to the device a second degree of freedom in orientation.

4. A sighting device according to claim 1, characterized in that the control circuit (21 to 24) further comprises means (23, Co) for performing an elevation correction as a function of tactical data.

**Patentansprüche**

1. Ziel- oder Schießvisiergerät an Bord eines Fahrzeugs, wie insbesondere eines Helikopters (30), zur Ausrichtung eines ebenfalls an Bord des Fahrzeugs montierten Nutzgeräts (20), wobei das Visiegerät (10) einen Lichtnetzgenerator (1), eine optische Kollimationsvorrichtung (2) zur Erzeugung eines kollimatierten Bildes des Lichtnetzes, eine optische Mischvorrichtung (2), gleichzeitig das kollimatierte Bild des Lichtnetzes und der äußeren Landschaft sichtbar zu machen, mechanische Haltemittel (4, 5, 6) zum festen Verbinden der optischen Kolkimationsvorrichtung und der optischen Mischvorrichtung mit dem Lichtnetzgenerator aufweist, sowie Verschiebemittel (3, 3.1, 3.2), um die Gesamtheit aus Kollimatorvorrichtung, Mischervorrichtung und Lichtnetzgenerator in der Weise drehen zu können, daß das kollimatierte Lichtnetzbild in jede gewünschte Visierrichtung (B) bewegt werden kann, dadurch gekennzeichnet, daß die optische Kollimationsvorrichtung und die optische Mischvorrichtung als konstitutiver Bestandteil des Visiergeräts (10) aus einem einzigen optischen, teilweise reflektierenden Bauelement (2) bestehen, das stigmatisch im Brennpunkt und im Unendlichen ist, das von holographischem Typ ist und mit einem Hologramm (16) arbeitet, welches die Eigenschaft hat, daß sein Brennpunkt und Unendlich kongugierte Punkte sind, wobei das Lichtnetz ein leuchtendes Objekt mit kleinem Feld ist, das im Brennpunkt des Hologramms liegt, daß die Ausrichtung (B) der Gesamtheit aus optischem Element (2) und Lichtnetzgenerator (1) der Ausrichtung (C) des Nutzgeräts (20) durch einen Regelkreis (21 bis 24) nachgeführt ist, der die Verschiebemittel (3, 3.1, 3.2) des Visiergeräts in Abhängigkeit von der Ausrichtungsabweichung (B, C) zwischen dem Visiergerät und dem Nutzgerät steuert, und daß das Fahrzeug eine Glaskanzel (27) und einen Bügel (9.1) besitzt, an dem die Verschiebemittel (3) des Visiers befestigt sind, derart, daß sie weitgehend mit der Abschattung zusammenfallen, welche der Bügel im Beobachtersichtfeld des Visiergeräts bildet.

2. Visiergerät nach Anspruch 1, dadurch gekennzeichnet, daß die mechanischen Haltemittel (4, 5) des Visiergeräts (10) eine geringe Abschattung im Sichtfeld des das Visiergerät nutzenden Beobachters bilden, und daß die Verschiebemittel (3) für das Visiergerät einen Elektromotor (3.1) aufweisen, der dem Visier einen Einstellungsfreiheitsgrad gibt.

3. Visiergerät nach Anspruch 2, dadurch gekennzeichnet, daß die Verschiebemittel (3) für das Visiergerät einen zweiten Elektromotor (3.2) aufweisen, der dem Visier einen zweiten Einstellungsfreiheitsgrad gibt.

4. Visiergerät nach Anspruch 1, dadurch gekennzeichnet, daß der Regelkreis (21 bis 24) weiter Mittel (23, Co) zur Herbeiführung einer Elevationskorrektur in Abhängigkeit von den taktischen Daten aufweist.

# FIG_1-a

FIG_1-b

0 104 987

0 104 987

FIG_2

FIG_3

FIG_4

0 104 987

FIG_5

FIG_6

4